# EUROPEAN PATENT SPECIFICATION

(11) **EP 3 772 185 B1**
(45) Date of publication and mention of the grant of the patent: **22.03.2023**
(21) Application number: 19189294.2
(22) Date of filing: 31.07.2019
(51) Int. Cl.: H04B 5/00, H04B 5/02

(54) **NEAR FIELD COMMUNICATION DEVICE**
NAHFELKOMMUNIKATIONSVORRICHTUNG
DISPOSITIF DE COMMUNICATION EN CHAMP PROCHE

(43) Date of publication of application: 03.02.2021
(73) Proprietor: Continental Automotive Technologies GmbH, 30165 Hannover (DE)
(72) Inventor: Craciun, Serban, 300687 Timisoara (RO); Ionescu, Ioana Sabina, 331042 Hunedoara (RO)
(74) Representative: Continental Corporation

(56) References cited:
- EP-A1- 3 416 298

## Description

The present invention relates to an NFC device, a method for eliminating selectively a disturber in an NFC device, and a vehicle comprising an NFC device. EP 3 416 298 A1 discloses an NFC device comprising an NFC reader.

An NFC device comprises an NFC reader that receives signals form an antenna. The NFC communication, especially the NFC reception, may be interrupted or disturbed by an interfering signal or a noise signal, especially when the NFC reader is connected via a cable to a remote antenna.

Therefore, a circuit design of an NFC reader may be desired that allows NFC communication in the presence of noise and interference.

The problem is solved by the subject-matter of the independent claims.

Embodiments are provided by the dependent claims, the following description and the accompanying figures. The present application discloses a NFC device (250), comprising an NFC reader (200) configured to receive an unsymmetric signal at a base operating frequency comprising:at least one filter configuration (208, 209, 210) configured to filter out a harmonic of the base operating frequency, characterized in that the NFC reader (200) further comprises:an NFC driver (203) with a symmetrical receive interface comprising a first line (212) and a second line (213);a first (209) and a second (210) filter configuration configured to filter out the harmonic of the base operating frequency, wherein the first filter configuration (209) is placed at the symmetrical receive interface in the first line (212) and the second filter configuration (210) is placed at the symmetrical receive interface in the second line (213), wherein the harmonic to be filtered by the filter configuration has a center frequency according to:f_harmonic = n × f_base + f_subcarrier, where inf_harmonic is the harmonic to be filtered,n is an positive integer greater than 2,f_base is the base operating frequency, and f_subcarrier is a subcarrier frequency relative to the base operating frequency. The present application discloses a method for eliminating selectively a disturber in an NFC device, with the steps:providing (402) an NFC device (250) comprising an NFC reader (200) for receiving signals at a base operating frequency; receiving (404) an unsymmetric signal; and filtering out (406) at least one harmonic of the base operating frequency, characterized in that the NFC reader (200) further uses:an NFC driver (203) with a symmetrical receive interface comprising a first line (212) and a second line (213); a first (209) and a second (210) filter configuration configured to filter out the harmonic of the base operating frequency, wherein the first filter configuration (209) is placed at the symmetrical receive interface in the first line (212) and the second filter configuration (210) is placed at the symmetrical receive interface in the second line (213),wherein the harmonic to be filtered by the filter configuration has a center frequency according to:f_harmonic = n × f_base + f_subcarrier, where inf harmonic is the harmonic to be filtered,n is an positive integer greater than 2,f_base is the base operating frequency, and f_subcarrier is a subcarrier frequency relative to the base operating frequency.

According to a first aspect, an NFC device that comprises an NFC reader, which is configured to receive signals at a base operating frequency is provided, comprising at least one filter configuration configured to filter out a harmonic of the base operating frequency. The NFC device may also comprise an NFC transmitter and thus representing a transmitter.

It has been found that especially a frequency equal with a harmonic of the base operating NFC frequency is corrupting the operation of an NFC reader, so that the functional reliability of a specific NFC device is not ensured. Regarding an NFC transceiver, a typical base operating frequency is 13.56 MHz. The signal has typical sub-carrier frequency offsets of 106 kHz, 212 kHz, 424 kHz and 848 kHz. Supposing a typical operating state of the above mentioned device, corruption at functional level will occur when different types of coupling will appear between the device and a disturbance source that operates a signal with a frequency equal with a harmonic of the base operating frequency of the NFC device.

It has to be noticed that the expression "filter out a harmonic" is to be understood such that a specific frequency is filtered out, in contrast to filtering out a broad frequency range by, for example, a low pass filter filtering out higher frequencies and letting pass a low frequency range. In order to be effective, a low pass filter at first harmonics has to be an active one, or has to be a high order passive one, which will introduce losses since it has to be arranged in series with the signal path. Filtering selectively one or more frequencies on the other side can be implemented more easily and is more effective than a low pass filter.

According to the invention, the NFC reader further comprises an NFC driver with a symmetrical receive interface comprising a first line and a second line, and a first and a second filter configuration. The first and the second filter configuration are configured to filter out the harmonic of the base operating frequency. The first filter configuration is placed at the symmetrical receive interface in the first line and the second filter configuration is placed at the symmetrical receive interface in the second line.

The circuits described in the following correspond to and replace the typical EMC filter circuit, which filters the signal and passes the filtered signal to the receiver circuit, where the signal is decoded. The first line and the second line carry the signal from, for example, a remote antenna. The signal is fed with, for example, a coaxial cable unsymmtrically into the NFC reader. The single-ended signal is then passed via a BALUN to the first and the second line, which comprises, for example, capacitors to condition the signal and to guide the signal to the receive input interface of the NFC driver.

The most problematic harmonic is the second one, around 28 MHz. However, at different power levels of the disturber, other harmonics have implications as well in perturbing NFC communication. Basically, a critical frequency would be considered as a multiplied base frequency, adding to this number the subcarrier of the base frequency.

Therefore, according to the invention, the harmonic to be filtered by the filter configuration has a center frequency according to
f_harmonic = n × f_base + f_subcarrier, wherein
f_harmonic is the harmonic to be filtered,
n is an positive integer equal to or greater than 2,
f_base is the base operating frequency, and
f_subcarrier is a subcarrier frequency relative to the base operating frequency.

According to an embodiment, the NFC reader further comprises an unsymmetrical, i.e. single-ended signal line configured to connect the NFC reader via a cable, e.g. the coaxial cable, to an antenna, which may be a remote antenna, and a filter configuration configured to filter the harmonic of the base operating frequency connected to the unsymmetrical signal line. In other words, the harmonic filter is placed directly at the input of the signal from the coaxial cable, before the signal is converted to a symmetric signal, for example by applying a BALUN (balanced-unbalanced) circuit. In this way, disturbing frequency parts are prevented from finding their way into the symmetrical receive signal.

According to an embodiment, the at least one filter configuration is a trap filter comprising an LC configuration. The trap filter is a band stop filter described by the LC configuration with values chosen such that the specific filter has a resonance point equal to the disturber frequency that needs to be eliminated. The filtered-out frequencies in the case of having more than one trap filter may be one and the same frequency or may be different frequencies at each of the trap filters, or a combination, so that e.g. two filters filter out a first frequency and a third filter filters out a second frequency.

According to a further embodiment, the trap filter is a multi-tuned trap filter, i.e., for example, instead of a single filter configuration, two or more similar filter configurations, each consisting, e.g., of a capacitor C and an inductor L in series, are arranged in parallel, having different values. In this way, several different harmonics may be cancelled.

According to a second aspect, a vehicle comprising an NFC device with an NFC reader as described above is provided. For example, the NFC reader is a passive NFC which does modulate the NFC field, wherein the NFC antenna is placed at the exterior of the vehicle, so that the NFC may be used for access, or in the interior of the car. In this case the NFC device may be used, e.g., for starting the engine, or it may have telematics functions.

The NFC reader may be integrated into other devices that receive NFC signals from a remote antenna via, for example, a coaxial cable, wherein the coaxial cable is subject to receive interfering signals.

According to a third aspect, a method for eliminating selectively a disturber in an NFC device is provided. The method comprises the following steps:
- providing an NFC device comprising an NFC reader for receiving signals at a base operating frequency;
- receiving an unsymmetric, i.e. single-ended, signal; and
- filtering out one or more harmonics of the base operating frequency.

By the method, an unsymmetrical signal, which may have been received by a remote antenna at an operating frequency of the NFC device and which may have been transmitted from the remote antenna over a cable, as for example, a coaxial cable, is received by the NFC reader. The signal received at the NFC reader may comprise signal components which have been added on the way from the anenna to the NFC reader. The reason for the existence of the additional signal components are, for example, perturbances occurred due to the noise involved by the capacitive coupling existent between the NFC Antenna cable and a potential source of disturbance propagated by cable means placed in the near vicinity of the NFC Antenna or near coaxial cable. That is, these components are mainly due to the unsymmetric transmission between the antenna and the NFC reader. The most problematic components, the harmonics of the base operating frequency, i.e., at least one harmonic of the base operating frequency, are filtered out from the received unsymmetric signal. The signal then is converted from unsymmetric to symmetric, resulting in two corresponding signals, which are transmitted on a first and a second receive line to the NFC reader. Before the signals reach the NFC reader, they are filtered again on each of the first and second receive lines, so that again at least one harmonic of the base operating frequency, which may be a residual harmonic after the first filtering. In principle, also any other specific interfering frequency may be filterd out by the trap filters. The such filtered signal is finally provided to the NFC reader. Thus, the steps may be more sophistically described as follows:
The step of filtering out at least one harmonic of the base operating frequency may include receiving signals from a remote antenna first, wherein the NFC reader is connected to the remote antenna by a cable, e.g., a coaxial cable.

The receiving of signals from a remote antenna may include receiving signals from the antenna unsymetrically, converting the unsymmetrical signal into a symmetrical signal, and providing the symmetrical signal to the NFC reader.

The step of filtering out at least one harmonic of the base operating frequency may be a step performed after the step of receiving the signals unymmetrically from the antenna and before converting the unsymmetrical signal into a symmetrical signal.

Additionally or alternatively, the step of filtering out at least one harmonic of the base operating frequency may be a step performed after converting the unsymmetrical signal into a symmetrical signal and directly before providing the symmetrical signal to the NFC reader. That is, there may be a further signal treatment between converting and filtering out a harmonic directly before providing the symmetrical signal to the NFC reader. For example, there may be a further filtering, blocking or grounding unwanted signals in out-of-band freqency ranges, conducting wanted signal other frequency ranges, impedance matching circuits, etc.

The described embodiments similarly pertain to the method for eliminating selectively a disturber in an NFC reader and for the NFC reader. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

These and other features, aspects and advantages of the present invention will become better understood with reference to the accompanying figure and the following description.
Fig. 1 shows an NFC reader circuit,
Fig. 2 shows an NFC device comprising an NFC reader circuit according to an embodiment,
Fig. 3 shows a vehicle according to an embodiment.
Fig. 4 shows a block diagram of a method according to an embodiment.

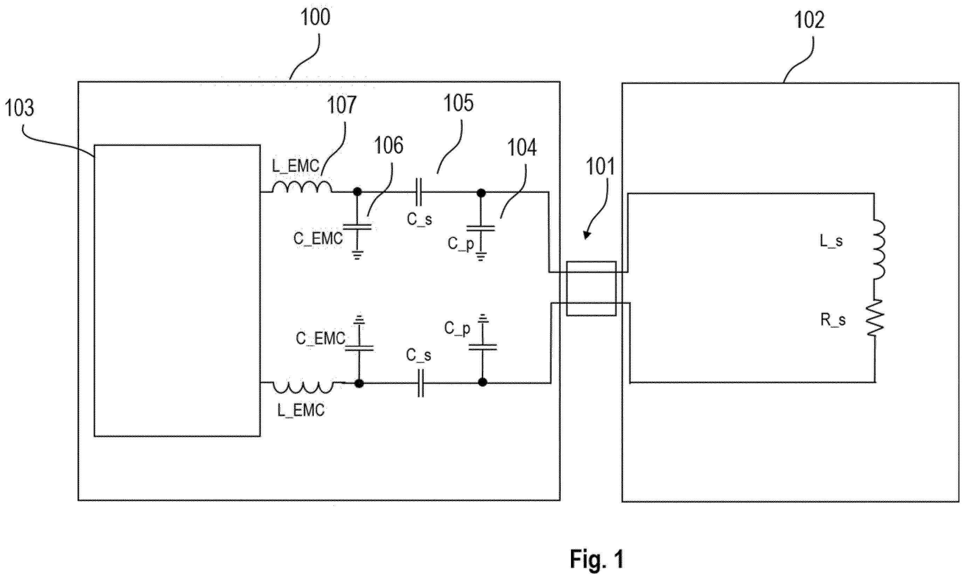

Fig. 1 shows a typical NFC reader circuit 100 with a symmetrical connection 101 to an NFC antenna 102. The NFC reader 100 receives signal from the antenna 102 and the short, for example, printed connection 101 relates the incoming signal to a common mass using capacitors C_p. The NFC reader 100 filters out DC components by C_s, filters EMC components using, for example an LC-low pass filter consisting of a capacity C_EMC 105 and an inductivity L_EMC, and provides the filtered signal to the NFC IC, which may be an NFC driver, or NFC controller 103, where the demodulation and data processing is performed.

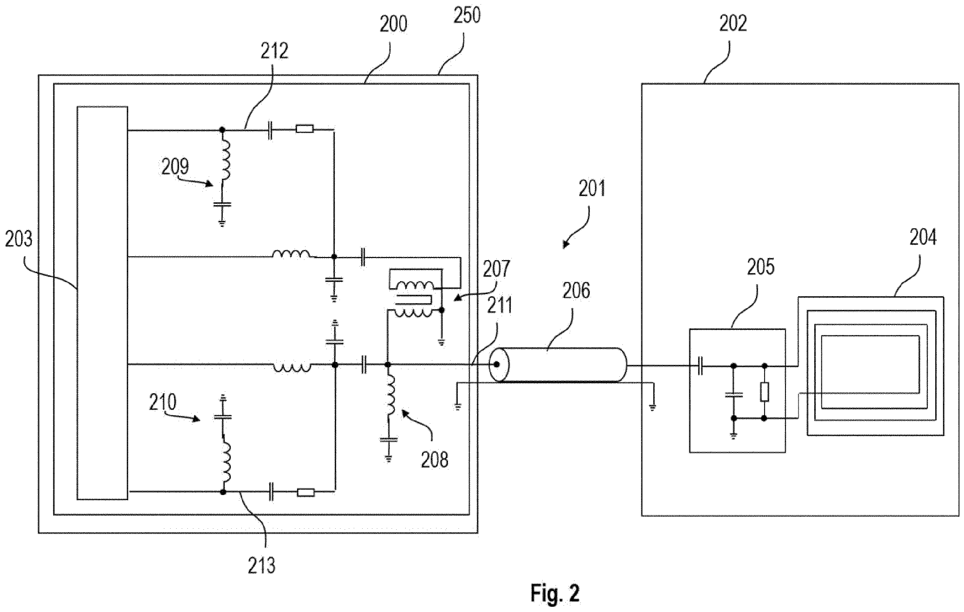

Fig. 2 shows an example of an NFC device 250 comprising an NFC reader according to an embodiment, with three trap filters 208, 209, 210, each described by an LC configuration with values chosen in order to make the specific filter to have a resonance point equal to the disturber frequency that needs to be eliminated.

A first filter 208 is placed directly on the signal line 211, right at the output from the BALUN transformer 207, in
principal, to eliminate the perturbance occurred due to the noise involved by the capacitive coupling existent between the NFC antenna cable 206 and a potential source of disturbance propagated by cable means placed in the near vicinity of the NFC antenna 202 or near coaxial cable 206. Secondly, two filters 209, 210 are placed on the Rx lines 212, 213 of the NFC driver 203 in order to eliminate signals that can be received by the transceiver of a specific disturber frequency.

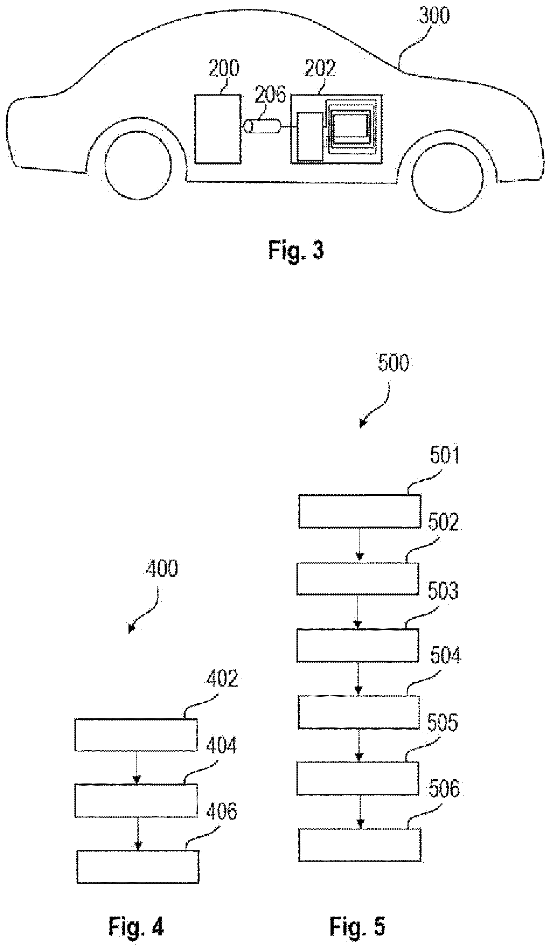

Fig. 3 shows a vehicle according to an embodiment comprising an NFC device 250 with an NFC reader 200. The NFC reader 200 is coupled via a cable 201 to an NFC antenna 203.

Fig. 4 shows a block diagram of a method according to an embodiment, comprising the steps:
- Providing 402 an NFC device 250 comprising an NFC reader 200 for receiving an unsymmetric signal at a base operating frequency;
- Receiving 404 an unsymmetric signal;
- Filtering out 406 at least one harmonic of the base operating frequency.

Fig. 5 shows a more detailed block diagram of a method 500 according to an example.

Method 500 comprises the following steps:
- Providing 501an NFC device 250 comprising an NFC reader 200 for receiving signals at a base operating frequency;
- Receiving 502 an unsymmetric signal from a remote antenna;
- Filtering out 503 at least a harmonic of the base operating frequency from the received unsymmetric signal;
- Converting 504 the unsymmetrical signal into a symmetrical signal on a first and a second receive line;
- Filtering out 505, at least one harmonic of the base operating frequency from the symmetrical signal on the first and the second receive line;
- Providing 506 the filtered signal to the NFC reader.

The shown NFC device 250 with the NFC reader 200 and the method increase the immunity of an NFC technology based device, more specific, to eliminate the perturbation that occurs due to the influence that a disturber signal with a base operating frequency equal to an harmonic of the 13.56 MHz-frequency of the NFC device 250. The presented solution is especially applicable for the NFC readers which have the NFC antenna remotely connected through a long coaxial cable (e.g., up to 3m length) to the main electronic circuits.

The proposed solution provides a noise improvement of more than 40dB, solving a lot of issues related to the immunity of an NFC device.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims.

## Claims

1. NFC device (250), comprising an NFC reader (200) configured to receive an unsymmetric signal at a base operating frequency comprising:
at least one filter configuration (208, 209, 210) configured to filter out a harmonic of the base operating frequency,
**characterized in that** the NFC reader (200) further comprises:
a n NFC driver (203) with a symmetrical receive interface comprising a first line (212) and a second line (213);
a first (209) and a second (210) filter configuration configured to filter out the harmonic of the base operating frequency, wherein the first filter configuration (209) is placed at the symmetrical receive interface in the first line (212) and the second filter configuration (210) is placed at the symmetrical receive interface in the second line (213),
wherein the harmonic to be filtered by the filter configuration has a center frequency according to:
f_harmonic = n × f_base + f_subcarrier, wherein
f_harmonic is the harmonic to be filtered,
n is an positive integer greater than 2,
f_base is the base operating frequency, and
f_subcarrier is a subcarrier frequency relative to the base operating frequency.

2. NFC device (250) according to claim 1 , wherein the NFC reader (200) further comprises:
an unsymmetrical signal line (211) configured to connect the NFC reader (200) via a cable (206) to an antenna (204);
a filter configuration (208) configured to filter a harmonic of the base operating frequency connected to the unsymmetrical signal line (211).

3. NFC device (250) according to any of the previous claims, wherein the at least one filter configuration (208, 209, 210) is a trap filter comprising an LC configuration.

4. NFC device (250) according to any of the previous claims, wherein the trap filter is a multi-tuned trap filter.

5. Vehicle (300) comprising an NFC device (250) according to any of claims 1 to 4.

6. Method 400 for eliminating selectively a disturber in an NFC device, with the steps:
providing (402) an NFC device (250) comprising an NFC reader (200) for receiving signals at a base operating frequency;
receiving (404) an unsymmetric signal; and
filtering out (406) at least one harmonic of the base operating frequency,
**characterized in that** the NFC reader (200) further uses:
an NFC driver (203) with a symmetrical receive interface comprising a first line (212) and a second line (213);
a first (209) and a second (210) filter configuration configured to filter out the harmonic of the base operating frequency, wherein the first filter configuration (209) is placed at the symmetrical receive interface in the first line (212) and the second filter configuration (210) is placed at the symmetrical receive interface in the second line (213),
wherein the harmonic to be filtered by the filter configuration has a center frequency according to:
f_harmonic = n × f_base + f_subcarrier, wherein
f_harmonic is the harmonic to be filtered,
n is an positive integer greater than 2,
f_base is the base operating frequency, and
f_subcarrier is a subcarrier frequency relative to the base operating frequency.

## Patentansprüche

1. NFC-Vorrichtung (250), die ein NFC-Lesegerät (200) aufweist, das ausgebildet ist, ein nicht symmetrisches Signal bei einer Basisbetriebsfrequenz zu empfangen, und die Folgendes aufweist:
mindestens eine Filterkonfiguration (208, 209, 210), die ausgebildet ist, eine Harmonische der Basisbetriebsfrequenz herauszufiltern,
**dadurch gekennzeichnet, dass** das NFC-Lesegerät (200) ferner Folgendes aufweist:
eine NFC-Ansteuerung (203) mit einer symmetrischen Empfangsschnittstelle, die eine erste Leitung (212) und eine zweite Leitung (213) aufweist;
eine erste (209) und eine zweite (210) Filterkonfiguration, die ausgebildet sind, die Harmonische der Basisbetriebsfrequenz herauszufiltern, wobei die erste Filterkonfiguration (209) an der symmetrischen Empfangsschnittstelle in der ersten Leitung (212) positioniert ist und die zweite Filterkonfiguration (210) an der symmetrischen Empfangsschnittstelle in der zweiten Leitung (213) positioniert ist,
wobei die durch die Filterkonfiguration herauszufilternde Harmonische eine Mittenfrequenz gemäß dem Folgenden besitzt:
f_Harmonische = n × f_Basis + f_Unterträger, wobei
f_Harmonische die herauszufilternde Harmonische ist,
n eine positive ganze Zahl größer als 2 ist,
f_Basis die Basisbetriebsfrequenz ist und
f_Unterträger eine Unterträgerfrequenz in Bezug auf die Basisbetriebsfrequenz ist.

2. NFC-Vorrichtung (250) nach Anspruch 1, wobei das NFC-Lesegerät (200) ferner Folgendes aufweist:
eine nicht symmetrische Signalleitung (211), die ausgebildet ist, das NFC-Lesegerät (200) über ein Kabel (206) mit einer Antenne (204) zu verbinden;
eine Filterkonfiguration (208), die ausgebildet ist, eine Harmonische der Basisbetriebsfrequenz herauszufiltern, und die mit der nicht symmetrischen Signalleitung (211) verbunden ist.

3. NFC-Vorrichtung (250) nach einem der vorhergehenden Ansprüche, wobei die mindestens eine Filterkonfiguration (208, 209, 210) ein Trap-Filter ist, das eine LC-Konfiguration aufweist.

4. NFC-Vorrichtung (250) nach einem der vorhergehenden Ansprüche, wobei das Trap-Filter ein mehrfachabgestimmtes Trap-Filter ist.

5. Fahrzeug (300), das eine NFC-Vorrichtung (250) nach einem der Ansprüche 1 bis 4 aufweist.

6. Verfahren 400 zum wahlweisen Beseitigen eines Störers in einer NFC-Vorrichtung mit den folgenden Schritten:
Bereitstellen (402) einer NFC-Vorrichtung (250), die ein NFC-Lesegerät (200) zum Empfangen von Signalen bei einer Basisbetriebsfrequenz aufweist;
Empfangen (404) eines nicht symmetrischen Signals; und
Herausfiltern (406) mindestens einer Harmonischen der Basisbetriebsfrequenz,
**dadurch gekennzeichnet, dass** das NFC-Lesegerät (200) ferner Folgendes verwendet:
eine NFC-Ansteuerung (203) mit einer symmetrischen Empfangsschnittstelle, die eine erste Leitung (212) und eine zweite Leitung (213) aufweist;
eine erste (209) und eine zweite (210) Filterkonfiguration, die ausgebildet sind, die Harmonische der Basisbetriebsfrequenz herauszufiltern, wobei die erste Filterkonfiguration (209) an der symmetrischen Empfangsschnittstelle in der ersten Leitung (212) positioniert ist und die zweite Filterkonfiguration (210) an der symmetrischen Empfangsschnittstelle in der zweiten Leitung (213) positioniert ist,
wobei die durch die Filterkonfiguration herauszufilternde Harmonische eine Mittenfrequenz gemäß dem Folgenden besitzt:
f_Harmonische = n × f_Basis + f_Unterträger, wobei
f_Harmonische die herauszufilternde Harmonische ist,
n eine positive ganze Zahl ist, die größer als 2 ist,
f_Basis die Basisbetriebsfrequenz ist und
f_Unterträger eine Unterträgerfrequenz in Bezug auf die Basisbetriebsfrequenz ist.

## Revendications

1. Dispositif NFC (250), comprenant un lecteur NFC (200) configuré pour recevoir un signal asymétrique à une fréquence de fonctionnement de base comprenant :
au moins une configuration de filtre (208, 209, 210) configurée pour évacuer par filtrage un harmonique de la fréquence de fonctionnement de base ;
**caractérisé en ce que** le lecteur NFC (200) comprend en outre :
un pilote NFC (203) avec une interface de réception symétrique qui comprend une première ligne (212) et une seconde ligne (213) ; et
des première (209) et seconde (210) configurations de filtre configurées pour évacuer par filtrage l'harmonique de la fréquence de fonctionnement de base, dans lequel la première configuration de filtre (209) est placée au niveau de l'interface de réception symétrique dans la première ligne (212) et la seconde configuration de filtre (210) est placée au niveau de l'interface de réception symétrique dans la seconde ligne (213) ;
dans lequel l'harmonique à filtrer par la configuration de filtre présente une fréquence centrale conformément à :
f_harmonic = n × f_base + f_subcarrier, où :
f_harmonic est l'harmonique à filtrer ;
n est un entier positif supérieur à 2 ;
f_base est la fréquence de fonctionnement de base ; et
f_subcarrier est une fréquence de sous-porteuse relative à la fréquence de fonctionnement de base.

2. Dispositif NFC (250) selon la revendication 1, dans lequel le lecteur NFC (200) comprend en outre :
une ligne de signal asymétrique (211) configurée pour connecter le lecteur NFC (200) via un câble (206) à une antenne (204) ; et
une configuration de filtre (208) configurée pour filtrer un harmonique de la fréquence de fonctionnement de base connectée à la ligne de signal asymétrique (211).

3. Dispositif NFC (250) selon l'une quelconque des revendications précédentes, dans lequel l'au moins une configuration de filtre (208, 209, 210) est un filtre de piégeage qui comprend une configuration LC.

4. Dispositif NFC (250) selon l'une quelconque des revendications précédentes, dans lequel le filtre de piégeage est un filtre de piégeage à réglages multiples.

5. Véhicule (300) comprenant un dispositif NFC (250) selon l'une quelconque des revendications 1 à 4.

6. Procédé (400) pour éliminer de façon sélective un perturbateur dans un dispositif NFC, au moyen des étapes comprenant :
la fourniture (402) d'un dispositif NFC (250) qui comprend un lecteur NFC (200) pour recevoir des signaux à une fréquence de fonctionnement de base ;
la réception (404) d'un signal asymétrique ; et
l'évacuation par filtrage (406) d'au moins un harmonique de la fréquence de fonctionnement de base ;
**caractérisé en ce que** le lecteur NFC (200) utilise en outre :
un pilote NFC (203) avec une interface de réception symétrique qui comprend une première ligne (212) et une seconde ligne (213) ; et
des première (209) et seconde (210) configurations de filtre configurées pour évacuer par filtrage l'harmonique de la fréquence de fonctionnement de base, dans lequel la première configuration de filtre (209) est placée au niveau de l'interface de réception symétrique dans la première ligne (212) et la seconde configuration de filtre (210) est placée au niveau de l'interface de réception symétrique dans la seconde ligne (213) ;
dans lequel l'harmonique à filtrer par la configuration de filtre présente une fréquence centrale conformément à :
f_harmonic = n × f_base + f_subcarrier, où :
f_harmonic est l'harmonique à filtrer ;
n est un entier positif supérieur à 2 ;
f_base est la fréquence de fonctionnement de base ; et
f_subcarrier est une fréquence de sous-porteuse relative à la fréquence de fonctionnement de base.
